# EUROPEAN PATENT SPECIFICATION

(11) **EP 1 513 741 B1**
(45) Date of publication and mention of the grant of the patent: **24.01.2007**
(21) Application number: 03733623.7
(22) Date of filing: 26.05.2003
(51) Int. Cl.: B65D 81/00, A47J 31/06

(54) **FILTER FOR EXTRACTION DEVICE**
FILTER FÜR AUFBRÜHVORRICHTUNG
FILTRE POUR DISPOSITIF D'EXTRACTION

(30) Priority: 31.05.2002 NL 1020755
(43) Date of publication of application: 16.03.2005
(73) Proprietor: LMTO ELECTRONICS B.V., 5431 NW Cuijk (NL)
(72) Inventor: KLAASSEN, Antonius, NL-6852 JL Huissen (NL)
(74) Representative: Jilderda, Anne Ayolt
(86) International application number: PCT/NL2003/000391
(87) International publication number: WO 2003/101860

(56) References cited:
- EP-A1- 0 041 931
- EP-A1- 0 361 569
- WO-A1-93/17932
- FR-A- 1 322 806
- FR-A- 1 543 608

## Description

The present invention relates to a device for preparing a liquid extract with a frothy layer from a substance, comprising a holder, with an internal space and with an outflow opening for delivering the extracted liquid, and comprising a removable filter assembly which, at least during use, resides in said holder, in which said filter assembly comprises an upper filter and a lower filter which are mutually detachable, each with an inner part comprising small holes and with a sturdy rim, in which said filter assembly is reusable and refillable with the substance for extraction, in which said filter assembly is made of a washable material, and in which hot water is supplied under pressure through said filter assembly in order to extract the substance contained therein. The present invention moreover relates to a method of preparing a liquid with a frothy layer from a substance using such a device and to a reusable and refillable filter assembly of the type as used in such a device.

A device for preparing a liquid with a frothy layer from a substance is known from the European patent application EP 904.718, wherein a pouch filled with ground coffee is arranged in a holder provided with an access opening for water and an outflow opening for the extracted coffee. After closing of the cover hot water can be supplied, as shown in the reference figure, to duct 40. The reference figure corresponds to figure 1 of EP 904.718 with a few reference numerals added. This hot water is supplied via cover 34 to the top of the pouch, passes through the pouch and collects as coffee extract in recess 20. The coffee extract then spouts through the spout opening 22 into the collecting reservoir 28. This collecting reservoir 28 is filled with café crème which flows via opening 30 out of the collecting reservoir to leave the housing via outlet opening 26.

The design of this apparatus builds on the apparatus described in the American patent US 5,649,472, although arranged hereon in the apparatus described in EP 904.718 are allegedly improved clamping means. In the European patent EP 904.717 is described an alleged improvement to this apparatus relating to the position of radial grooves arranged in the bottom of the holder. Such a coffee machine including the use of such grooves is otherwise also known from the American patent US 3,620,155.

In all these devices for preparing coffee with a froth layer, also known as café crème, use is made of a pouch, generally consisting of an upper sheet 8 and a lower sheet 10, each made of filtering paper. The upper sheet and lower sheet are joined together close to their longitudinal edges using a sealing seam. The substance for extracting, such as for instance ground coffee, is present between these sheets.

There are however a large number of drawbacks associated with the use of this pouch. In the first place, separate manufacture of this pouch makes the application expensive. The flexibility in flavour for the consumer further depends on what the manufacturer offers. Finally, there is no possibility for the consumer to vary the strength of the coffee since, in addition to a measured quantity of ground coffee in the pouch, a measured quantity of water is also carried through the pouch.

French patent application FR 948.422 discloses a device of the type as described in the opening paragraph which offers an end user substantially more freedom of use in this respect. The device known from this publication is an espresso machine with a holder which accommodates a reusable filter assembly which may be filled and repeatedly refilled by the user with ground coffee of his personal choice and strength. The filter assembly consists of a cup shaped lower filter with central region having filter pores and a disc shaped upper filter which also has a central region with pores and is received within the cup-shaped lower filter. The upper filter slides over a threaded central axis with the cup shaped lower filter, while enclosing a dose of ground coffee, and is fixed to the lower filter by means of a wing nut which holds the assembly tightly together during use.

This known filter assembly, however, also has a number of drawbacks. It is an object of the present invention to provide for a device as described in de opening paragrapg which alleviates these drawbacks, associated with the prior art devices, at least to a significant extent.

To this end a device as stated in the opening paragraph is, according to the invention, characterized in that, at least during use, said upper filter and said lower filter abut each other along said sturdy rims, in that the device is provided with a cover, and in that the upper filter and the lower filter are pressed onto each other, at least during use, when said cover is closed.

It has been found that it is not necessary to supply the amount of substance to be extracted in a precise measure in a pouch. Two washable filters for multiple use, one lower filter to cover the bottom of the holder and one upper filter to cover the substance to be extracted, give the same result as the use of a pouch. This was not to be expected since the supplying of hot water under pressure to the coffee could result in leakage of water and coffee grounds in the apparatus, which, surprisingly, is absolutely not the case. The washable filters to be made to measure for the device bcan be reused many times without even a single paper filter, let alone a pouch, having to be made and destroyed or recycled each time.

Small holes are understood to mean holes with such a dimension that only the water or the extracted liquid passes through, but that grains of the substance to be extracted or the grounds formed thereby are held back.

The outer edge of at least one of the two filters is preferably manufactured from one or more of the following substances: plastic, metal, wood, stone and ceramic. The outer edges of the two filters are preferably manufactured from the same material. The inner part of at least one of the two filters is more preferably manufactured from one or more of the following substances: metal, plastic, cotton and paper. It is possible for instance to envisage a filter with an outer ring of plastic and an inner portion of metal, for instance iron with very fine holes, as a kind of gauze. Should the holes of the lower filter be too large for a particular application, the addition of a paper filter in the form of the middle part of the filter is of course possible, although generally speaking this will not be necessary. The dimensions of the holes of the upper filter are less critical and will generally be larger than those of the lower filter, as they are intended only for passage of the water carried into the holder to the substance to be extracted.

The form of the filters depends on the form of the holder of the device; it can for instance be rectangular or oval but is preferably round. According to a preferred embodiment of the invention, the outer ring of both the filters to be used is a ring with a width of about 0.001 cm to 2 cm, preferably of about 0.1 cm to 1 cm, more preferably about 0.5 cm. The outer edge of both filters is a ring with a thickness of about 0.001 cm to 1 cm, preferably of about 0.005 cm to 0.02 cm, more preferably about 0.01 cm. Both filters have an outer periphery of about 10 to 25 cm, preferably of about 15 to 20 cm, more preferably about 18.5 cm.

The inner portion of the lower filter which is intended for arranging thereon of the substance to be extracted generally has a greater depth than the upper filter which serves to cover the substance to be extracted. In this patent application the depth of the filter is understood to mean the distance from the top side of the upper edge to below the inner portion of the filter. The lower filter preferably has a depth of about 0.3 to 0.7 cm, more preferably about 0.5 cm, for preparation of about 2 dl of an extract, this depending of course on the strength of the substance to be extracted. In order to prepare about 4 dl of an extract the lower filter has a depth of about 0.7 to 1.3 cm, preferably about 1.0 cm. The upper filter generally has hardly any depth.

When the upper filter is placed on the lower filter and the cover of the device as described above is closed to prepare an extract, the lower and upper filters are generally pressed onto each other so that no leakage of grounds or liquid occurs. Should there however be a chance of the filters shifting relative to each other, for instance when another form of holder is applied, and therefore filters with a shape other than for instance a round shape, such a leakage can then be further prevented by fastening means arranged on the top side of the outer edge of the lower filter and on the top side of the outer edge of the upper filter. These fastening means consist for instance of protruding portions on the top side of the outer edge of the lower filter, while the top side of the outer edge of the upper filter is provided with recesses into which said protruding parts fit, or vice versa. The protruding portions are particularly small studs and the recesses are holes. In another embodiment the outer edges of both filters are held together using magnetic force, wherein either the outer edges are themselves made of magnetic material or are held together using magnetic strips arranged on the outer edges. Also falling within the scope of the invention is the use of a hinge with fastening system between the two filters, preferably connected to the hinge of the cover of the device, whereby the filters preferably coupled to the operating means of the cover of the extraction device can be folded open.

The substance to be extracted is in particular chosen from the group consisting of ground coffee, ground cacao or tea leaves, and more particularly ground coffee.

Another aspect of the present invention forms a method for preparing an extract, characterized in that a device as described above is applied, wherein prior to use the lower filter is arranged in the holder with the deeper inner part downward and the upper edge fitting onto the upper filter upward, the substance to be extracted corresponding to the extract is scooped onto the inner part of the lower filter, the upper filter is placed onto the first filter with the upper edge fitting onto the lower filter downward, so that the substance to be extracted is covered, and after use the filters with grounds of the substance to be extracted are removed, knocked out and/or washed clean and reused as desired. The holder including the filters is preferably rinsed with cold water so that the temperature of the filters is decreased and they can thus be readily taken hold of by hand.

A further aspect of the present invention forms a lower filter or upper filter for use in a device as described above.

The present invention will be further elucidated herein below on the basis of the accompanying embodiments and drawings. Corresponding parts are designated as far as possible in the figures with the same reference numerals.
- Figure 1: shows a top view of the lower filter (1) with outer edge (2) and the inner part (3) and optional recesses such as holes (4)
- figure 2: shows a top view of the upper filter (5) with outer edge (6) and the inner part (7) and optional protruding parts, such as small studs (8)
- figure 3: shows placing of the lower filter (1) in a device for preparing coffee with a froth layer, adjacently of which the upper filter (5) lies ready
- figure 4: shows lower filter (1) in a device for preparing coffee with a froth layer, with ground coffee arranged thereon
- figure 5: shows the top side of upper filter (5) arranged to cover ground coffee arranged on the lower filter in a device for preparing coffee with a froth layer.

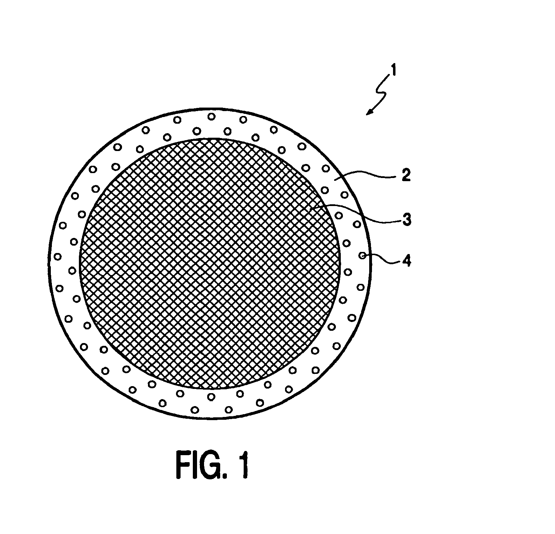

Finally, for the purpose of clarifying the description a figure is added by way of reference, namely figure 1 from the European patent application EP 904718 with several references from this application added.

Figure 1 shows details of the lower filter for use in the device for preparing an extract with a froth layer, wherein it will be apparent to the skilled person that the dimensions are dependent on the device in which the filter is applied. The depth of the lower filter is suitable for preparing about 2 dl liquid, or when used in a coffee machine in general about one cup of coffee. In order to make two cups of coffee at a time, a filter of twice the depth is suitable. It will be apparent to the skilled person that the form and dimensions of the filter to be used can be further varied, also depending on the form of the holder to be used.

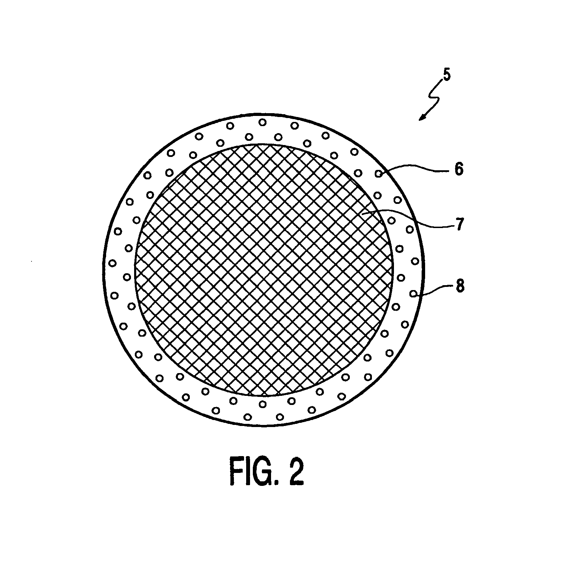

Figure 2 shows comparable details as indicated for figure 1, but then for the upper filter to be applied. Since this filter serves as cover, the depth thereof does not have to be as great as that of the lower filter.

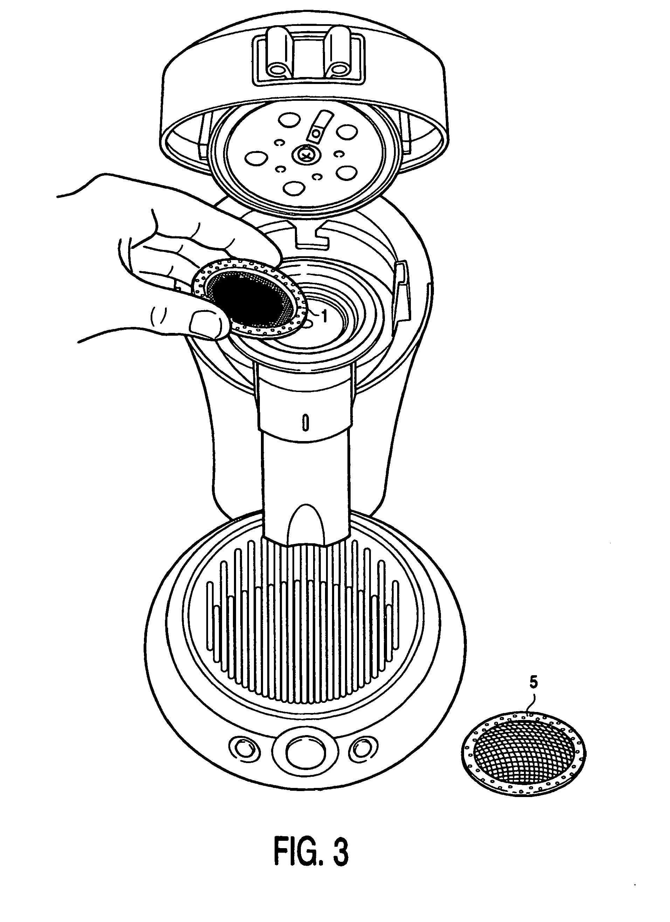

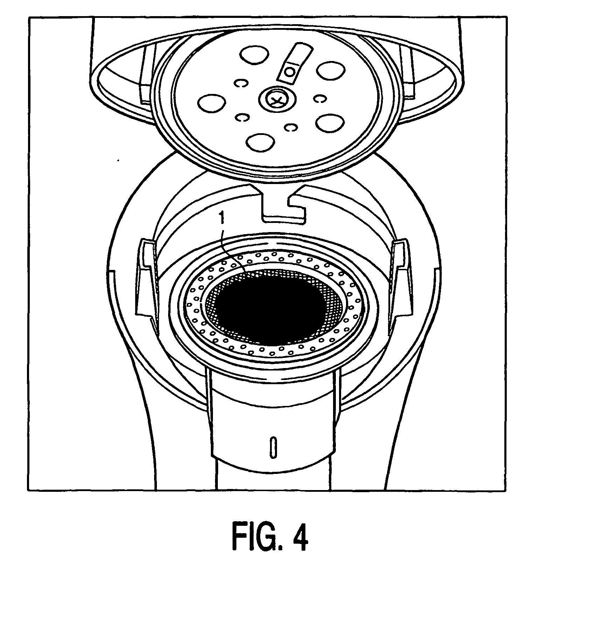

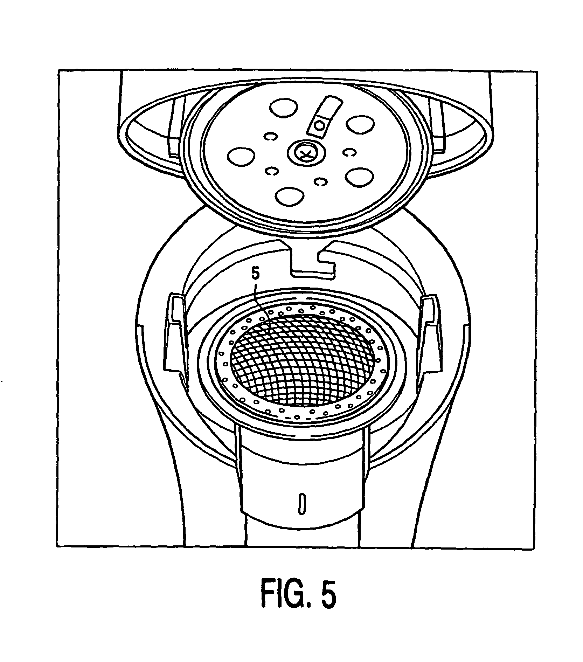

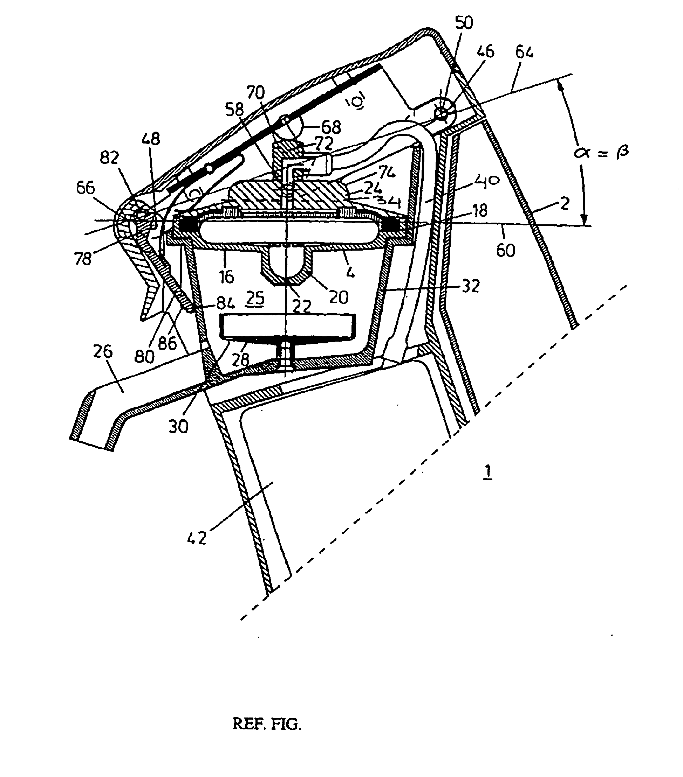

Figures 3-5 shows different stages of details of making coffee using a coffee machine for preparing coffee with a froth layer. The coffee machine shown here is known under the name 'senseo crema', Instead of arranging a pouch with ground coffee in the holder of the coffee machine, according to the present invention a lower filter is placed in the holder with the deep side of the inner part downward, as shown in figure 3. Ground coffee is subsequently scooped as required onto the lower filter with depth in a quantity and a flavour as desired, see figure 4. The ground coffee is then covered with the upper filter with the deeper side of the upper part directed upward and the outer edges of the filters against each other. The machine is then closed and started in the usual manner. The coffee extract with froth layer, also referred to as café crème, which is formed by the machine has a composition and taste wholly comparable to the coffee made using ground coffee in a pouch. After the coffee is made the two filters are washed clean and can be reused as required.

In addition to a greater flexibility in amount and type of substance to be extracted which can be used, the application of the above described filters also provides a considerable economic benefit for the consumer. A cup of café crème made according to the present invention gives a price advantage per cup of 150 to 200% compared to the use of a pouch.

Although the invention has been further elucidated in the foregoing with reference to only a single embodiment, it will be apparent that the invention is by no means limited to this given embodiment. A number of other variations and embodiments of the filters according to the invention are possible within the scope of the invention for the skilled person, particularly in respect of the use of different materials with optionally different fastening means on the outer edges, the manufacture of different forms and the use of different dimensions, also depending on the possible applications on different machines with which extracts of different substances with frothy layer can be prepared.

## Claims

1. Device for preparing a liquid extract with a frothy layer from a substance, comprising a holder, with an internal space and with an outflow opening (22) for delivering the extracted liquid, and comprising a removable filter assembly which, at least during use, resides in said holder, in which said filter assembly comprises an upper filter (5) and a lower filter (1) which are mutually detachable, each with an inner part (3,7) comprising small holes (4) and with a sturdy rim (2,6), in which said filter assembly is reusable and refillable with the substance for extraction, in which said filter assembly is made of a washable material, and in which hot water is supplied under pressure through said filter assembly (1,5) in order to extract the substance contained therein, **characterized in that**, at least during use, said upper filter (5) and said lower filter (1) abut each other along said sturdy rims (2,6), **in that** the device is provided with a cover (34), and **in that** the upper filter (5) and the lower filter (1) are pressed onto each other, at least during use, when said cover is closed.

2. Device according to claim 1 **characterized in that** said rim (2,6) of at least one of said upper and lower filter comprises one or more of the materials plastic, metal, wood and ceramics.

3. Device according to claim 1 or 2 **characterized in that** said inner part (3,7) of at least one of said upper and lower filter comprises one or more of the materials plastic, metal, cotton and paper.

4. Device according to one or more of the preceding claims **characterized in that** both said filters are round.

5. Device according to claim 4 **characterized in that** the rim of both said filters comprises a ring with a width of about 0.001 cm to 2 cm.

6. Device according to claim 4 or 5 **characterized in that** the rim of both said filters comprises a ring with a thickness of about 0.001 cm to 1 cm.

7. Device according to one or more of claims 4-6, **characterized in that** the rim of both said filters extends over a length of about 10 to 25 cm.

8. Device according to one or more of claims 4-7, **characterized in that** said lower filter has a depth of about 3 to 7 millimetre, particularly about 5 millimetre.

9. Device according to one or more of claims 4-7, **characterized in that** said lower filter has a depth of about 7 to 13 millimetre, particularly about 10 millimetre.

10. Device according to any of the preceding claims **characterized in that** said substance is chosen from a group consisting of ground coffee, ground cacao and tea leaves.

11. Reusable and refillable filter assembly of the type as used in the device according to one or more of claims 1-10 comprising an upper filter (5) and a lower filter (1) which are mutually detachable, each with an inner part (3,7) comprising small holes (4) and with a sturdy rim (2,6), said filter assembly being reusable and refillable with a substance for extraction and being made of a washable material **characterized in that**, at least during use, said upper filter (5) and said lower filter (1) engage each other along said sturdy rims (2,6).

12. Method of preparing a liquid with a frothy layer from a substance **characterized in that** a device according to one or more of claims 1-10 is applied, wherein, prior to use, a lower filter (1) is arranged in the holder having an inner part (3) with small holes (4) and a sturdy rim (2), the substance to be extracted is scooped onto the inner part (3) of the lower filter (1), an upper filter (5) having an inner part (7) with small holes (4) and a sturdy rim (6) is placed with its rim (6) on the corresponding rim (2) of the lower filter (1) in order to cover the substance and **in that**, after use, the filters (1,5), with grounds of the extracted substance, are removed, knocked out and/or cleaned to be reused as desired.

## Patentansprüche

1. Vorrichtung zur Herstellung eines Flüssigextraktes mit einer schaumigen Schicht aus einer Substanz, mit einem Halter, mit einem Innenraum und mit einer Ausflussöffnung (22) zur Ausgabe der extrahierten Flüssigkeit und mit einer herausnehmbaren Filtereinheit, die wenigstens während der Benutzung in dem Halter verbleibt, wobei die Filtereinheit ein oberes Filter (5) und ein unteres Filter (1) aufweist, die beide lösbar sind, wobei jedes ein Innenteil (3, 7) mit kleinen Löchern (4) und mit einem festen Rand (2, 6) aufweist, wobei die Filtereinheit wiederverwendbar und mit der zu extrahierenden Substanz wiederbefüllbar ist, wobei die Filtereinheit aus einem waschbaren Material besteht, und wobei heißes Wasser unter Druck durch die Filtereinheit (1, 5) geführt wird, um die darin enthaltene Substanz zu extrahieren, **dadurch gekennzeichnet, dass** wenigstens während der Verwendung das obere Filter (5) und das untere Filter (1) entlang der festen Ränder (2, 6) aneinander angrenzen, und dass die Vorrichtung mit einem Deckel (34) versehen ist, und dass das obere Filter (5) und das untere Filter (1) wenigstens während der Benutzung gegeneinander gepresst werden, wenn der Deckel geschlossen ist.

2. Vorrichtung nach Anspruch 1, **dadurch gekennzeichnet, dass** der Rand (2, 6) wenigstens bei einem von dem oberen und unteren Filter eines oder mehrere der Materialien Kunststoff, Metall, Holz und Keramik aufweist.

3. Vorrichtung nach Anspruch 1 oder 2, **dadurch gekennzeichnet, dass** das innere Teil (3, 7) wenigstens von einem des oberen und unteren Filters eines oder mehrere der Materialien Kunststoff, Metall, Baumwolle und Papier aufweist.

4. Vorrichtung nach irgendeinem oder mehreren der vorhergehenden Ansprüche, **dadurch gekennzeichnet, dass** beide genannten Filter rund sind.

5. Vorrichtung nach Anspruch 4, **dadurch gekennzeichnet, dass** der Rand von beiden Filtern einen Ring mit einer Breite von ungefähr 0,001 cm bis 2 cm aufweist.

6. Vorrichtung nach Anspruch 4 oder 5, **dadurch gekennzeichnet, dass** der Rand bei beiden Filtern einen Ring mit einer Dicke von ungefähr 0,001 cm bis 1 cm aufweist.

7. Vorrichtung nach irgendeinem oder mehreren der Ansprüche 4 - 6, **dadurch gekennzeichnet, dass** sich der Rand bei beiden Filtern über eine Länge von ungefähr 10 bis 25 cm erstreckt.

8. Vorrichtung nach irgendeinem oder mehreren der Ansprüche 4 - 7, **dadurch gekennzeichnet, dass** das untere Filter eine Tiefe von ungefähr 3 bis 7 mm, insbesondere von ungefähr 5 mm aufweist.

9. Vorrichtung nach einem oder mehreren der Ansprüche 4 - 7, **dadurch gekennzeichnet, dass** das untere Filter eine Tiefe von ungefähr 7 bis 13 mm, insbesondere von ungefähr 10 mm aufweist.

10. Vorrichtung nach irgendeinem der vorhergehenden Ansprüche, **dadurch gekennzeichnet, dass** die genannte Substanz aus einer Gruppe ausgewählt ist, die aus gemahlenem Kaffee, gemahlenem Kakao und Teeblättern besteht.

11. Wiederverwendbare und wiederbefüllbare Filteranordnung der Art, die in der Vorrichtung gemäß einem oder mehreren der Ansprüche 1 - 10 verwendet wird, umfassend ein oberes Filter (5) und ein unteres Filter (1), die beide lösbar sind, wobei jedes ein inneres Teil (3, 7) mit kleinen Löchern (4) und mit einem festen Rand (2, 6) aufweist, wobei die Filteranordnung wiederverwendbar und mit einer zu extrahierenden Substanz wiederbefüllbar ist und aus einem waschbaren Material besteht, **dadurch gekennzeichnet, dass** wenigstens während der Benutzung das obere Filter (5) und das untere Filter (1) aneinander entlang der festen Ränder (2, 6) angreifen.

12. Verfahren zur Gewinnung einer Flüssigkeit mit einer schaumigen Schicht aus einer Substanz, **dadurch gekennzeichnet, dass** eine Vorrichtung gemäß einem oder mehreren der Ansprüche 1 - 10 verwendet wird, bei der vor der Verwendung ein unteres Filter (1) in dem unteren Teil eines inneren Teils (3) mit kleinen Löchern (4) und einem festen Rand (2) vorgesehen wird, dass die zu extrahierende Substanz auf das innere Teil (3) des unteren Filters (1) aufgeschöpft wird, ein oberes Filter (5) mit einem inneren Teil (7) mit kleinen Löchern (4) und einem festen Rand (6) mit seinem Rand (6) auf den entsprechenden Rand (2) des unteren Filters (1) platziert wird, um die Substanz zu bedecken, und dass nach der Verwendung die Filter (1, 5) mit gemahlenen Rückständen der extrahierten Substanz entfernt werden, ausgeschlagen und/oder gereinigt werden, um wie gewünscht wiederverwendet zu werden.

## Revendications

1. Dispositif de préparation d'un extrait liquide avec une couche écumeuse d'une substance, comprenant un support, avec un espace interne et avec une ouverture de sortie d'écoulement (22) pour délivrer le liquide extrait, et comprenant un ensemble de filtre amovible qui, au moins durant l'utilisation réside dans ledit support, dans lequel ledit ensemble de filtre comprend un filtre supérieur (5) et un filtre inférieur (1) mutuellement détachables, chacun muni d'une partie intérieure (3, 7) comprenant de petits trous (4) et une bordure (2, 6) ferme, dans laquelle ledit ensemble de filtre est réutilisable et rechargeable avec la substance prévue pour l'extraction, dans lequel ledit ensemble de filtre est réalisé en un matériau lavable, et dans lequel de l'eau chaude est fournie sous pression à travers ledit ensemble de filtre (1, 5), pour extraire la substance y étant contenue, **caractérisé en ce que**, au moins durant l'utilisation, ledit filtre supérieur (5) et ledit filtre inférieur (1) viennent buter l'un sur l'autre le long desdites bordures (2, 6) fermes, **en ce que** le dispositif est muni d'un couvercle (34), et **en ce que** le filtre supérieur (5) et le filtre inférieur (1) sont pressés l'un sur l'autre, au moins durant l'utilisation, lorsque ledit couvercle est fermé.

2. Dispositif selon la revendication 1, **caractérisé en ce que** ladite bordure (2, 6) d'au moins l'un, du filtre supérieur et du filtre inférieur, est composé d'un ou plusieurs des matériaux que sont une matière synthétique, un métal, du bois et de la céramique.

3. Dispositif selon la revendication 1 ou 2, **caractérisé en ce que** ladite partie intérieure (3, 7) d'au moins l'un dudit filtre supérieur et dudit filtre inférieur est composée d'un ou plusieurs des matériaux que sont une matière synthétique, un métal, du coton et du papier.

4. Dispositif selon l'une ou plusieurs des revendications précédentes, **caractérisé en ce que** lesdits deux filtres sont ronds.

5. Dispositif selon la revendication 4, **caractérisé en ce que** la bordure desdits deux filtres comprend un anneau d'une largeur d'environ 0,001 cm à 2 cm.

6. Dispositif selon la revendication 4 ou 5, **caractérisé en ce que** la bordure desdits deux filtres comprend un anneau, d'une épaisseur d'environ 0,001 cm à 1 cm.

7. Dispositif selon l'une ou plusieurs des revendications 4 à 6, **caractérisé en ce que** la bordure desdits deux filtres s'étend sur une longueur d'environ 10 à 25 cm.

8. Dispositif selon l'une ou plusieurs des revendications 4 à 7, **caractérisé en ce que** ledit filtre inférieur est d'une profondeur d'environ 3 à 7 mm, en particulier d'environ 5 mm.

9. Dispositif selon l'une ou plusieurs des revendications 4 à 7, **caractérisé en ce que** ledit filtre inférieur est d'une profondeur d'environ 7 à 13 mm, en particulier d'environ 10 mm.

10. Dispositif selon l'une quelconques des revendications précédentes, **caractérisé en ce que** ladite substance est choisie dans un groupe formé de café moulu, cacao moulu et feuilles de thé.

11. Ensemble de filtre réutilisable et rechargeable du type tel qu'utilisé dans le dispositif selon l'une ou plusieurs des revendications 1 à 10, comprenant un filtre supérieur (5) et un filtre inférieur (1) détachables mutuellement, chacun ayant une partie intérieure (3, 7) comprenant de petits trous (4) et une bordure (2, 6) ferme, ledit ensemble de filtre étant réutilisable et rechargeable avec une substance devant être extraite et réalisé en un matériau lavable, **caractérisé en ce que**, au moins durant l'utilisation, ledit filtre supérieur (5) et ledit filtre inférieur (1) viennent en contact l'un avec l'autre le long desdits bordures (2, 6) fermes.

12. Procédé de préparation d'un liquide avec une couche écumeuse à partir d'une substance, **caractérisé en ce que** le dispositif selon l'une ou plusieurs des revendications 1 à 10 est appliqué, dans lequel, avant utilisation, un filtre inférieur (1) est agencé dans le support comprenant une partie intérieure (3), avec de petits trous (4) et une bordure (2) ferme, la substance devant être extraite étant écopée sur la partie intérieure (3) du filtre inférieur (1), un filtre supérieur (5), ayant une partie intérieure (7) avec de petits trous (4) et une bordure (6) ferme, est placée avec sa bordure (6) placée sur la bordure (2) correspondante du filtre inférieur (1), pour couvrir la substance, et **en ce que**, après utilisation, les filtres (1, 5), avec les moutures de la substance extraite, sont enlevés, secoués et/ou nettoyés, pour être réutilisés de la façon souhaitée.
